Europäisches Patentamt

European Patent Office

Office européen des brevets

(11) Publication number: **0 314 758 B1**

(12) **EUROPEAN PATENT SPECIFICATION**

(45) Date of publication of patent specification: **23.12.92** (51) Int. Cl.⁵: **A23G 3/30**

(21) Application number: **88904845.0**

(22) Date of filing: **11.05.88**

(86) International application number:
**PCT/US88/01490**

(87) International publication number:
**WO 88/08672 (17.11.88 88/25)**

(54) **CHEWING GUM HAVING A CONTROLLED SWEETNESS.**

(30) Priority: **15.05.87 US 50534**
**15.05.87 US 50626**
**15.05.87 US 50627**

(43) Date of publication of application:
**10.05.89 Bulletin 89/19**

(45) Publication of the grant of the patent:
**23.12.92 Bulletin 92/52**

(84) Designated Contracting States:
**AT BE CH DE FR GB IT LI LU NL SE**

(56) References cited:
**EP-A- 0 064 361      EP-A- 0 267 809**
**EP-A- 0 289 462      WO-A-88/08671**
**FR-A- 2 337 762      US-A- 3 746 554**
**US-A- 3 943 258      US-A- 4 228 198**
**US-A- 4 389 394      US-A- 4 405 654**
**US-A- 4 435 440      US-A- 4 473 546**
**US-A- 4 495 170      US-A- 4 549 013**
**US-A- 4 612 373**

(73) Proprietor: **WM. WRIGLEY JR. COMPANY**
**410 North Michigan Avenue**
**Chicago Illinois 60611(US)**

(72) Inventor: **YATKA, Robert**
**8823 W. 147th St.**
**Orland Park, IL 60462(US)**
Inventor: **PROMBO, Patrick**
**18446 Dixie Highway**
**Homewood, IL 60430(US)**
Inventor: **BARABOLAK, Roman, M.**
**2811 Buckingham**
**Westchester, IL 60153(US)**
Inventor: **ZIBELL, Steven**
**6049 W. 129th Street**
**Palos Hts., IL 60463(US)**
Inventor: **MCGREW, Gordon, N.**
**1216 Dobson Street**
**Evanston, IL 62242(US)**

Rank Xerox (UK) Business Services

(Hough et al.) "Enhancement in the sweetness of sucrose", Nature, vol. 236, 28 October 1976

(Michael Waldholz) "Johnson Johnson seek approval to sell sweetner" ... Wall Street Journal 12 February 1987

(74) Representative: **Allard, Susan Joyce et al**
**BOULT, WADE & TENNANT, 27 Furnival**
**Street**
**London EC4A 1PO(GB)**

## Description

### FIELD OF THE INVENTION

The present invention relates to chewing gum compositions containing sucralose having a controlled and extended release of sweetness and methods of their manufacture.

### BACKGROUND OF THE INVENTION

Chewing gums comprise many ingredients including sweeteners. Sweeteners suitable for chewing gums include both natural and artificial sweeteners. Recently, the high intensity artificial sweeteners have been the focus of investigation for use in chewing gum.

High intensity sweeteners may be hundreds of times sweeter than natural sweeteners such as sucrose and glucose. High intensity sweeteners of recent interest include aspartame, acesulfame K, cyclamates, saccharin, and now sucralose.

Sucralose is a new high intensity sweetener which is a tri-chlorinated sucrose derivative and is about 600 times sweeter than sucrose. Sucralose has been reported to be much cheaper than aspartame and at least 3 times sweeter. Compared to some other high intensity sweeteners, sucralose has a sweet taste more similar to sucrose. Chemically, sucralose is known as 4,1',6'-trichloro-4,1',6-trideoxy-galactosucrose, or alternatively 1,6'-dichloro-1,6-dideoxy-($\beta$)-D-fructofuranosyl4-chloro-4-deoxy-($\alpha$)-D-galactopyranoside. In addition, sucralose is also referred to in short from as TGS. Its use to sweeten substances including oral compositions is disclosed in U.S. Patents 4,343,934 and 4,389,394.

One of the limitations of chewing gum is that the sweetness and flavor are rapidly lost during chewing. Thus, chewing gum producers are constantly trying to control and/or extend the time in which a consumer of chewing gum can enjoy its flavor and sweetness.

Chewing gum manufacturers have generally sought to delay the release of sweeteners. However much is unknown about the sweetening and release mechanisms of sweeteners. Surprisingly the art has not thoroughly investigated these mechanisms. Therefore the further understanding of sweetener release will lead to new and improved chewing gum products.

It is also often desirable to produce a chewing gum having a rapid release of sweetness and flavor upon chewing. The flavor and sweetness of chewing gums containing fast release sweeteners, however dissipates quickly during chewing. Thus the consumer who desires an initial sweetness impact during chewing must sacrifice the enjoyment of long last sweetness and flavor. Similarly, the consumer who desires a chewing gum having a longer lasting sweetness and flavor must forego the sensation of an initial sweetness impact.

It is known that the sweetness and flavor can be extended in chewing gum by using high levels of high intensity sweeteners such as aspartame, saccharin and cyclamate. The extension properties of those sweeteners, however, are limited by their release characteristics during chewing of the gum.

Providing a chewing gum having improved sweetness and flavor extension would satisfy a long-felt need and would constitute a notable advance in the art.

Further, providing a chewing gum having improved sweetness and flavor extension in combination with an initial sweetness impact upon chewing would satisfy a long-felt need and would constitute a notable advance in the art.

### SUMMARY OF THE INVENTION

In accordance with one embodiment of the present invention, there is provided a chewing gum composition comprising a chewable gum base and sweetener comprising sucralose wherein within the initial 2 minutes of chewing, said sucralose releases from said gum at a rate less than about 8 sucrose equivalents per minute, and at about 10 minutes of chewing, said sucralose releases from said gum at a rate greater than about 3 sucrose equivalents per minute.

In accordance with a further embodiment of the present invention, there is provided a chewing gum composition comprising a mixture of chewing gum ingredients comprising at least a chewable gum base and a sweetener comprising an effective amount of sucralose and a fast release sweetener. The chewing gum has both an initial impact of sweetness and a longer lasting sweetness.

In accordance with yet a further embodiment of the present invention, there is provided a chewing gum composition comprising a mixture of chewing gum ingredients comprising at least a chewable gum base and an effective amount of sweetener comprising sucralose and a fast release sweetener. In this embodiment, the fast release sweetener comprises sucralose treated to act as a fast release sweetener during chewing.

In still yet another embodiment of the present invention, there is provided a method of manufacturing a chewing gum composition comprising a mixture of chewing gum ingredients comprising at least a chewable gum base and an effective amount of sweetener comprising sucralose. The method comprises adding the sucralose to the chewing gum mixture in an amount such that within the initial 2 minutes of chewing, said sucralose releases from said gum at a rate less than about 8 sucrose equivalents per minute, and at about 10 minutes of chewing, said sucralose releases from said gum at a rate greater than about 3 sucrose equivalents per minute.

In still a further embodiment, there is provided a method of manufacturing a chewing gum composition comprising a mixture of chewing gum ingredients comprising at least a chewable gum base and an effective amount of sweetener comprising sucralose and a fast release sweetener. The method comprises mixing the sucralose, the fast release sweetener, and the chewable gum base with the chewing gum mixture to obtain the chewing gum composition. The chewing gum composition has both an initial impact of sweetness and a longer lasting sweetness.

In accordance with a still further embodiment, the present invention provides a method of producing a chewing gum composition as above wherein the fast release sweetener comprises sucralose treated to act as a fast release sweetener. In this embodiment the chewing gum composition has both a controlled and extended sweetness release during chewing.

In accordance with still yet another embodiment of the present invention, there is contemplated a method of manufacturing a chewing gum containing sucralose. The method comprises adding the sucralose to a mixer of chewing gum ingredients in an amount such that within the initial 2 minutes of chewing, the sucralose releases from the chewing gum at a rate less than about 8 sucrose equivalents per minute. Preferably, the sucralose is added in an amount such that at about 10 minutes of chewing, the sucralose releases from the chewing gum at a rate greater than about 3 sucrose equivalents per minute. More preferably, the sucralose is added to the chewing gum ingredient mixture in an amount sufficient to yield a chewing gum containing greater than about 0.07 weight percent sucralose. Most preferably, the sucralose is added in an amount sufficient to yield about 0.12 weight percent sucralose.

In yet another embodiment of the method of manufacturing of the present invention, sucralose is added to the chewing gum ingredients in an amount to yield a chewing gum containing between about 0.07 and about 0.40 weight percent sucralose.

The sucralose containing chewing gum which, when chewed, maintains its sweetness and flavor for extended chewing periods heretofore not known. In addition, when chewed the chewing gum of the present invention releases its ingredients in a manner which yield a desirable balance of sweetness and flavor. The sucralose containing chewing gum of the present invention also has a more intense sweetness than heretofore known and, gives an early burst of sweetness and flavor when initially chewed, but also maintains its sweetness and flavor for extended chewing periods.

These and other advantages of the present invention will become apparent from the following description, which, when taken in conjunction with the accompanying drawings, discloses presently preferred exemplary embodiments of the present invention. It should be understood that this description is illustrative rather than limitative, the scope of the present invention being defined by the appended claims.

BRIEF DESCRIPTION OF THE DRAWINGS

Presently preferred exemplary embodiments of the invention summarized above are illustrated in the accompanying drawings.

FIGURE 1 is a plot of the release rates of two sweeteners as a function of time. The release rate is expressed as a percentage of the initial level released per minute.

FIGURE 2 is a plot of sweetness release rate from chewing gum containing two sweeteners at various levels as a function of time. The sweetness release is expressed in sucrose equivalents per minute.

FIGURE 3 is a plot of the cumulative release of sweetener over time. The amount released is expressed as a percentage of the initial concentration.

DETAILED DESCRIPTION OF PRESENTLY PREFERRED EMBODIMENTS

As their name implies, artificial sweeteners are sweetening compounds not naturally found. Artificial sweeteners are synthesized from a wide variety of materials, and thus have various properties and physical structures.

For example, aspartame is a dipeptide sweetener prepared from the amino acids aspartic acid and

4

phenylalanine. On the other hand, saccharin is a benzithiazol compound prepared from toluene sulfonic acid. Though these compounds exhibit similar sweetness characteristics, they differ in other properties such as solubility, stability, and secondary sensory properties. Sucralose also is unique in its source and characteristics. In fact, sucralose is the only commercially promising high intensity sweetener which is a synthetic derivative of sucrose, a natural sugar.

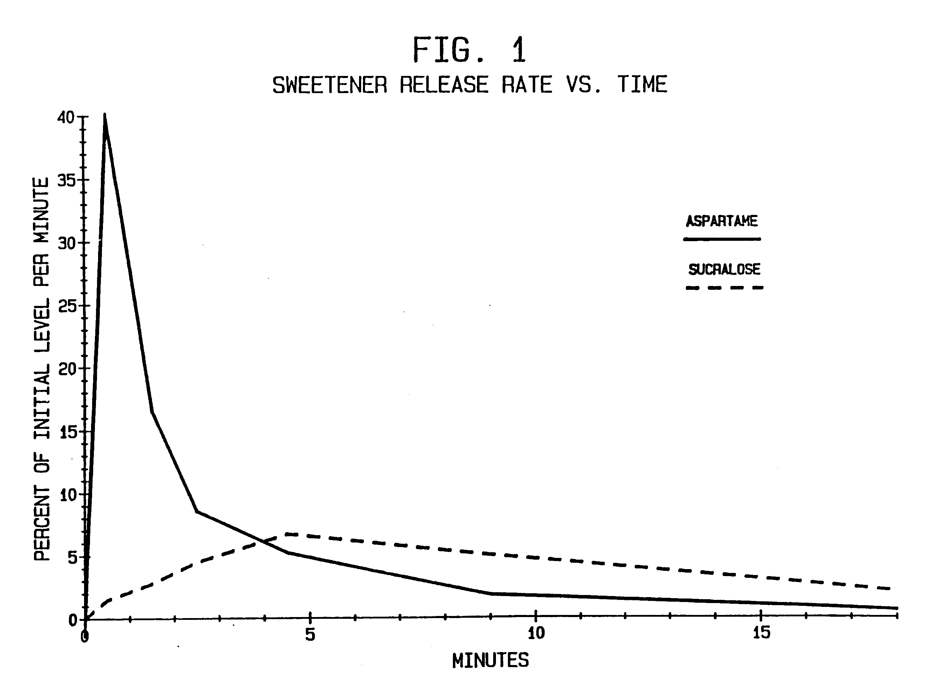

FIG. 1 illustrates and compares release rates of aspartame and sucralose from chewing gum during chewing. The values represented in FIG. 1 were obtained by having subjects chew pieces of gum containing the sweetener and analyzing the cud after various chewing intervals. The amount of sweetener remaining in the cud was then analytically determined. The release rate is expressed as a percent of the starting concentration of the sweetener released per minute. (For example: If a piece of gum initially contains 10 mg. of aspartame, at its peak release rate [40% per minute] it would release aspartame at a rate of 10 mg x 40% per minute = 4 mg/min.) Tests have shown that both sweeteners follow the respective rate curves depicted over a wide range of starting concentrations in the gum.

From the figure it can be seen that sucralose more closely approximates a constant release rate than aspartame during chewing.

It has been found that the extension properties of high intensity sweeteners such as aspartame, saccharin and cyclamate are limited by their release characteristics during chewing of the gum i.e., not enough of these sweeteners remain in the gum to provide substantial enhancement. As shown in FIG. 1, a substantial amount of the aspartame present in chewing gum is released during the early chewing period. Thus, as evidenced by the peak produced during the first few minutes of chewing, aspartame is released rapidly at first but much more slowly later on. This is because the aspartame is depleted by its rapid early release during the initial chewing period. Note that the peak aspartame release rate occurs at about 0.5 minutes.

It has been found that all other tested high and low intensity sweeteners either exhibit release characteristics similar to aspartame or, such as in the case of thaumatin or monellin, display virtually no release characteristics. Sucralose, however, has been found to possess exceptional release characteristics, releasing much more slowly during the initial period than aspartame but reaching a desirable peak release at about 4.5 minutes.

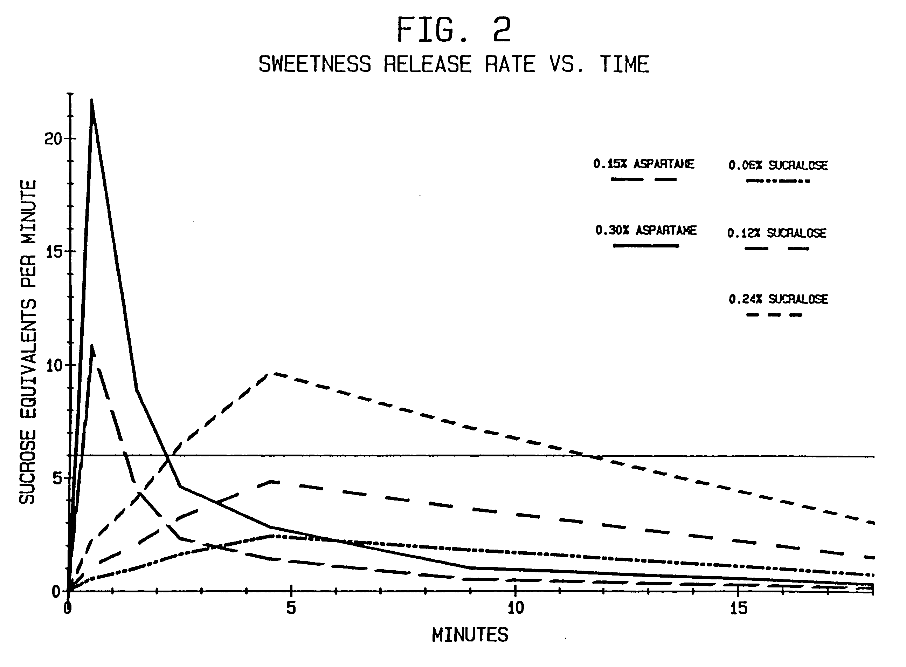

FIG. 2 illustrates projected physiological sweetness responses to chewing gums having various levels of the sweeteners sucralose and aspartame. FIG. 1, on the other hand, depicts the physical release rate of the respective sweeteners. The release of sweetness from chewing gums may be expressed in sucrose equivalents per minute. As used herein, a sucrose equivalent is a unit of sweetening power equal to the sweetening power present in a chewing gum containing 1 weight percent sucrose. Thus, since sucralose is about 600 times sweeter than sucrose, about 0.0017 weight percent sucralose provides one sucrose equivalent. Thus, the release of .0017 weight percent sucralose from chewing gum per minute is equal to the release of 1 sucrose equivalent per minute.

FIG. 2 compares sweetness release rates during chewing from chewing gum containing various levels of aspartame and sucralose. The sweetness release in FIG. 2 is expressed in sucrose equivalents per minute. Thus, for example, at a value of 10 sucrose equivalents per minute, the chewing gum is releasing sweetness theoretically equivalent to a sucrose sweetened gum releasing sucrose at a rate of 10 percent by weight of the gum per minute. The sweetness contributed by the artificial sweetener is in addition to that contributed by any sweet bulking agent which may be present at significant levels early in the chewing period. The values represented in FIG. 2 assume that sucralose is 600 times sweeter than sucrose and that aspartame is 180 times sweeter than sucrose at all usage levels.

Because the scale is a measure of absolute sweetness at any point during chewing, the different sweetener curves can be compared directly to each other. According to FIG. 2, to achieve a significantly greater sweetness extension, one must add large quantities of aspartame. But, as more aspartame is added, its release characteristics during the first few minutes of chewing cause an extremely high initial release of sweetness. Thus, as increased amounts of aspartame are added to achieve greater sweetness extension, the amount of aspartame released during the initial chewing period will be too high, and the chewing gum may cause discomfort to the consumer and be rejected. In addition, sweetness and flavor will be out of balance during the early chewing period, giving the consumer further reason for rejecting the chewing gum. Furthermore, the additional cost of increased quantities of aspartame are prohibitive.

Sucralose, however, has been found to have a flatter or more uniform release rate over time. As depicted in FIG. 2, sucralose gradually releases during the early chewing period. The consumer therefore experiences a more consistent release of high intensity sweetener over time resulting in a better balance of sweetness and flavor during chewing. Thus, as shown in FIG. 2, surprisingly large amounts of the high intensity sweetener, sucralose, can be added to a chewing gum without causing discomfort to the consumer and rejection of the chewing gum. As an added advantage, FIG. 2 illustrates that a greater sweetness extension than heretofore known is also achieved in chewing gum. Further, a chewing gum comprising sucralose in amounts contemplated by the present invention will yield a chewing gum having a more constant release of high intensity sweetener. Therefore, manufacturers will be able to produce a chewing gum which will more closely approximate a constant sweetness level over time.

For example, if one wanted to produce a chewing gum having a 6 sucrose equivalent per minute release rate over an approximate 18 minute period, he may prepare a chewing gum comprising about 0.24 weight percent sucralose. From Figure 2, it can be seen that the release curve of a chewing gum containing 0.24 weight percent sucralose intersects a constant sucrose equivalent release curve of 6 at about 2 minutes and about 12 minutes. Further, the maximum sucrose equivalent release rate from the 0.24% gum is never greater than 10 per minute, nor does it drop below 3 sucrose equivalents until after the 18 minute chewing period. On the other hand, a chewing gum containing 0.30 weight percent aspartame intersects the constant sucrose equivalent release curve of 6 at about one-eighth of a minute or about 7.5 seconds, and then again at about 2.25 minutes. Further, the maximum sucrose equivalent release rate of aspartame of about 22 occurs in less than one minute, and drops to about 0.5 by 15 minutes.

When employed in chewing gum formulations, the reason why sucralose possesses these unique release characteristics is not fully understood. For example, because of its relatively high water solubility, it might be expected that sucralose would quickly dissipate during chewing. Surprisingly, however, it has been found that sucralose does not provide significant early sweetness during the initial chewing period but instead provides a sustained release of sweetness and flavor during chewing in chewing gums. Without being limited to theory, it is believed that the particular release characteristics of sucralose are due at least in part to the compound's unique affinity to the chewing gum base or gum base ingredients.

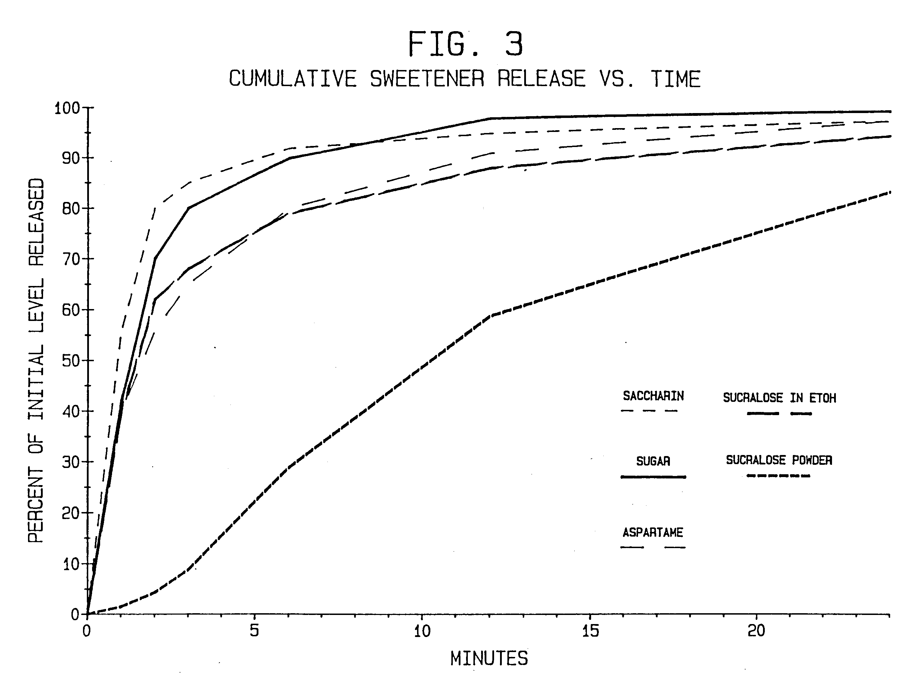

FIG. 3 illustrates the cumulative amount of sweetener released as a function of chewing time. The amount of sweetener released is presented as a percent of initial concentration of the sweetener in the chewing gum. From FIG. 3, it can be seen that aspartame and saccharin release quickly during chewing from a chewing gum composition. By comparison, when sucralose is added in the powder form to the chewing gum mixture, it releases during chewing much more slowly and more closely to a constant release rate. The release rate is represented by the slope of the cumulative curve. However, when powdered sucralose is first modified prior to its admixture with the other chewing gum ingredients, here in FIG. 3 by dissolution in ethanol, its release rate during the initial chewing period is significantly increased.

The form in which sucralose is added to the chewing gum composition apparently affects its release during chewing. When added to other gum ingredients during manufacture in the powder form, sucralose does not appear to release from the chewing gum in significant amounts until about three to about five minutes into chewing. On the other hand, when the rate of release of sucralose is controlled, for example, by dissolution in a food acceptable organic solvent, encapsulation or co-drying, an initial release of sweetness and flavor is experienced almost instantaneously by the consumer upon chewing.

Further, since sucralose also possesses sweetness extension properties, powdered forms of sucralose can be used in combination with sucralose which has been encapsulated, co-dried or dissolved in a solvent to produce a chewing gum having both an initial intense release of flavor and sweetness and an extended release of sweetness and flavor throughout chewing. Alternatively, modified or treated sucralose can be combined with other modified fast release sweeteners which have been treated to exhibit sweetness extension properties.

Moreover, a chewing gum containing an early burst of sweetness and flavor when initially chewed, but which also maintains its sweetness and flavor for extended chewing periods may be provided by combining an effective amount of sweetener comprising sucralose and a fast release sweetener.

Fast release sweeteners contemplated include the low intensity sweeteners sucrose, dried invert sugar, fructose, xylitol, and combinations thereof. Fast release sweeteners also include most high intensity sweeteners including aspartame, acesulfame, alitame, saccharin, cyclamate, dihydrochalcones, alone or in any combination. Specifically excepted from this group are thaumatin and monellin which are considered to be slow release sweeteners. Further, those skilled in the art will recognize that low intensity sweeteners may also serve as bulking agents in the chewing gum in whole or in part. In addition, softener may be combined with the low intensity sweeteners such as in an aqueous solution.

Fast release sweeteners contemplated release at least about 60% of their sweetness in the first five minutes of chewing. Further, fast release sweeteners contemplated have a sweetness intensity at least about equal to that of sucrose in order to provide a high impact of sweetness during the first three minutes of chewing. Thus, the high intensity sweeteners sucralose, thaumatin and monellin, and the low intensity sweeteners sorbitol, mannitol, dextrose, maltose, corn syrup solids, glactose, dextrin, hydrogenated starch hydrolysates, maltitol, isomaltitol, are not considered to be fast release sweeteners.

Fast release sweeteners may be found naturally, or they may be sweeteners which are treated such that they possess fast release properties. Sweeteners not considered fast release sweeteners are, of course, slow release sweeteners. However, those skilled in the art will understand that slow release sweeteners may also be present in the chewing gum. Thus, slow release sweeteners such as sorbitol, mannitol, dextrose, corn syrup solids and hydrogenated starch hydrolysates may be present as bulking agents or binders.

These advantages have been made possible by the present invention disclosed herein. Other advantages realized from the present invention, not mentioned but readily apparent to those skilled in the art in view of the instant disclosure are also contemplated.

In one embodiment, the present invention contemplates a chewing gum comprising sucralose in an amount such that within the initial 2 minutes of chewing, the sucralose releases from the gum at a rate less than about 8 sucrose equivalents per minute. At a sucrose equivalent above 8, the sweetness from a sweetener in combination with that from a bulking agent or other sweeteners present in the gum may result in a total sweetness level so high as to cause discomfort. At a sucrose equivalent at about 8, the amount of sucralose released, however, will not be so high as to cause the consumer to reject the chewing gum. Further, at this level, the consumer will experience a desirable balance of sweetness and flavor.

In accordance with another embodiment of the present invention, there is provided a chewing gum comprising sucralose in an amount such that at about 10 minutes of chewing, the sucralose releases from the gum at a rate greater than about 3 sucrose equivalents per minute. In accordance with this embodiment, chewing gums possessing sucralose in the amount contemplated exhibit a more uniform release rate of sweetener over time as well as a greater sweetness extension than heretofore known. Preferably, in order to exhibit an even greater sweetness extension, the chewing gum of the present invention will comprise sucralose in an amount such that at about 15 minutes of chewing, the sucralose releases from the gum at a rate greater than about 1.5 sucrose equivalents per minute.

At a sucrose equivalent less than about 1, it is believed that sweetness is not perceived by most consumers of gum. Preferably, sweetness is best perceived above a sucrose equivalent of about 2. However, those skilled in the art will understand that the degree of sweetness perception varies greatly depending upon the individual consumer.

In accordance with yet another embodiment, the present invention contemplates a chewing gum comprising sucralose in amounts greater than 0.07 weight percent. Preferably, the chewing gum will comprise sucralose in an amount between about 0.07 and about 0.40 weight percent sucralose. Chewing gum, in accordance with this embodiment, exhibits the advantages described above.

In general, a chewing gum composition comprises a water soluble bulk portion and a water insoluble chewable gum base portion and, typically water insoluble flavoring agents. The water soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobuylene-isoprene copolymer, styrene butadiene rubber as well as natural latexes such a chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystaline and natural waxes such as beeswax and carnuba. According to the present invention, the insoluble gum base constitutes between about 5 to 95 weight percent of the gum. Preferably the insoluble gum base comprises about 10 to about 50 weight percent of the gum and more preferably about 25 to about 35 weight percent.

The gum base typically also includes a filler component. The filler component such as calcium carbonate, magnesium carbonate, talc, dicalcium phosphate and the like. The filler may constitute between about 5 to about 60 weight percent of the gum base. Preferably, the filler comprises about 5 to 50 weight percent of the chewing gum base.

Gum bases typically also contain softeners, including glycerol monostearate and glycerol triacetate. Further, gum bases may also contain optional ingredients such as antioxidants, colors, and emulsifiers. The present invention contemplates employing any commercially acceptable gum base.

The water soluble portion of chewing gum generally comprises a sweet, powder bulking agent which is most often a sugar such as sucrose, dextrose, or maltose; or a sugar alcohol such as sorbitol, mannitol, isomaltutol, maltitol, or xylitol. Mixtures of two or more of these bulking agents are commonly used in chewing gums.

The water soluble portion of chewing gum may further comprise softeners, sweeteners, flavoring agents and combinations thereof. Softeners are added to the chewing gum in order to optimize the chewability and mouth feel of the gum. Softeners, also known in the art as plasticisers or plasticizing agents, generally constitute between about 0.5 to about 15.0 weight percent of the chewing gum. Softeners contemplated by the present invention include glycerin, lecithin, and combinations thereof. Further, aqueous sweetener solutions such as those containing sorbitol, hydrogenated starch hydrolysates, corn syrup and combinations thereof may be used as softeners and binding agents in gum.

Sweeteners contemplated by the present invention include both sugar and sugarless components. Sugar sweeteners generally include saccharide containing components commonly known in the chewing gum art which comprise but are not limited to sucrose, dextrose, maltose, dextrin, dried invert sugar, fructose, levulose, galactose, corn syrup solids, and the like, alone or in any combination. Sugarless sweeteners include components with sweetening characteristics but are devoid of the commonly known sugars and comprise but are not limited to sugar alcohols such as sorbitol, mannitol, xylitol, hydrogenated starch hydrolysates and maltitol, alone or in any combination. Also contemplated as sugarless sweeteners are any high intensity or artificial sweetener such as aspartame, salts of acesulfame, alitame, saccharin and its salts, cyclamic acid and its salts, dihydrochalcones, thaumatin, sucrose derivatives such as sucralose and monellin, alone or in any combination. Further, those skilled in the art will recognize that any combination of sugar and/or sugarless sweeteners may be employed in the chewing gum. Further, those skilled in the art will recognize the sweetener may be present in the chewing gum in whole or in part as a water soluble bulking agent. In addition, the softener may be combined with the sweetener such as in an aqueous sweetener solution.

A flavoring agent may be present in the chewing gum in an amount within the range of from about 0.1 to about 10.0 weight percent and preferably from about 0.5 to about 3.0 weight percent of the gum. The flavoring agent may comprise essential oils, synthetic flavors, or mixtures thereof including but not limited to oils derived from plants and fruits such as citrus oils, fruit essences, peppermint oil, spearmint oil, clove oil, oil of wintergreen and anise. Artificial flavoring components are also contemplated for the present invention. Those skilled in the art will recognize that natural and artificial flavoring agents may be combined in any sensorally acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to any commercially available mixer known in the art. After the ingredients have been thoroughly mixed, the gum mass is discharged from the mixer and shaped into the desired form such as by rolling into sheets and cutting into sticks, extruding into chunks, or casting into pellets.

Generally, the ingredients are mixed by first melting the gum base and adding it to the running mixer. The base may also be melted in the mixer itself. Color or emulsifiers may also be added at this time. A softener such as glycerin may then be added next along with syrup and a portion of bulking agent. Further portions of the bulking agent may then be subsequently added to the mixer. A flavoring agent is typically added with the final portion of the bulking agent. The entire mixing procedure typically takes from five to fifteen minutes, but longer mixing times may sometimes be required. Those skilled in the art will recognize that many variations of the above described procedure may be followed.

In one embodiment of the present invention, the initial release of sucralose from chewing gum during chewing can be increased by dissolving it in a food acceptable organic solvent. Solvents contemplated include food acceptable solvents such as ethanol, propylene glycol, glycerin, glycerol triacetate, vegetable oil, ethyl acetate and triethyl citrate, and combinations thereof. In addition, flavoring agents, individually or as a blend, are suitable solvents. Surprisingly, it has been found that when sucralose is first dissolved in a solvent prior to its admixture with other gum constituents, its release from the chewing gum is increased, and a greater initial impact and better balance of flavor and sweetness results. In addition, it was also surprising to discover that a solution comprising a blend of sucralose, alcohol, and flavor apparently gives a greater early intensity of sweetness than when sucralose is added in the normal manner as a powder.

The present embodiment contemplates dissolving sucralose in any food acceptable organic solvent in any acceptable amount. Thus, sucralose may be dissolved in any amount up to its solubility limit or saturation point in the particular solvent employed. Further, additional amounts of sucralose may be dissolved in any particular solvent by increasing the temperature of the solvent thereby increasing the solubility limit.

According to one preferred embodiment of the present invention, sucralose may first be dissolved in ethyl alcohol. Preferably, the amount of sucralose dissolved in the alcohol is sufficient to yield about a 1 to about 20 weight percent solution. More preferably, sucralose is dissolved in ethanol to yield about a 10 to about 15 weight percent solution. The powdered sucralose may be added to and dissolved in the solvent in any conventional manner. In another embodiment, a sucralose solution as described above may be blended with a flavoring agent in any manner common to those skilled in the art. Preferably, the sucralose solution is blended with a flavoring agent to yield a sucralose to flavor weight ratio range of about 1:300 to about 1:3. A range of about 1:50 to about 1:10 is preferred. The sucralose/flavor blend may then be added to or admixed with other gum ingredients in any manner known to those skilled in the art for adding flavor to gum.

In accordance with yet another embodiment, sucralose may first be dissolved in ethyl alcohol and the solution added as a separate ingredient at any time in the gum manufacturing process. It is preferred to add the solution relatively late in the mix to limit evaporation of the solvent.

In accordance with still another embodiment, sucralose may be dissolved directly in a solvent comprising a flavoring agent. In this instance, sucralose may be dissolved in an amount to yield about a 1 to 20 weight percent solution depending of course on maximum solubility limits. Once dissolved, the sucralose in flavor solution can then be added or admixed with other gum ingredients in the same manner as a normal flavor addition.

The initial release of sucralose may also be increased by co-drying or encapsulating sucralose with another material. Materials suitable for encapsulation or co-drying contemplated by the present invention include but are not limited to water soluble compounds such as cellulose, cellulose derivatives, starches, proteins, sugars, sugar alcohols and vegetable gums, and mixtures thereof.

The preferred quantity and type of encapsulating or co-drying material employed may vary depending upon the encapsulating or co-drying method employed, the manner in which the treated sucralose is to be added to the mixture of gum ingredients, and the degree of increase in release rate desired. Further, those skilled in the art will recognize that the degree of modification of the initial release rate of sucralose will vary depending upon a variety of factors including but not limited to the method used, the type of encapsulent or co-drying agent used, and the amount of encapsulent or agent used. Accordingly, sucralose in the powdered form may be treated by spray drying, granulation, fluidized bed coating, complex coacervation, spray chilling, prilling, extrusion, freeze drying, agglomeration and other similar techniques.

In accordance with another preferred embodiment, sucralose can be controlled to release almost instantaneously upon chewing by spray drying or granulating the powdered sucralose with a compound having a high water solubility such as maltodextrin, hydroxypropylmethylcellulose, gum arabic, carboxymethylcellulose, starches, sugars and sugar alcohols.

When desired fast release sweeteners may be added to the other gum ingredients in any conventional manner known in the art. Preferably, the fast release sweetener is merely mixed with powdered sucralose and the other gum ingredients. The fast release sweetener may be present in any food acceptable quantity. Preferably, the chewing gum formulation contains between about 0.1 and about 10 weight percent high intensity fast release sweeteners or, between about 30 and about 80 weight percent low intensity fast release sweeteners. Those skilled in the art will recognize that the exact amount of fast release sweetener employed will depend on the exact balance of initial sweetness impact and sweetness extension that is desired, the total sweetness desired, the fast release sweetener employed, and other similar factors.

The fast release sweetener may be any compound which is a natural fast release compound, or it may be a compound which has been treated such that it will act as a fast release sweetener during chewing. Treating methods contemplated include encapsulation, co-drying and dissolution of the slow release sweeteners into various solvents including water, alcohols and flavors. Preferably, since some high intensity sweeteners such as sucralose are slow release sweeteners, these high intensity sweeteners may be treated in accordance with the present invention so that they act as fast release sweeteners during chewing.

According to one embodiment, slow release sweeteners may first be dissolved in an alcohol solvent to alter their release characteristics. Preferably, the amount of the slow release sweetener dissolved in the alcohol is sufficient to yield about a 1 to about 20 weight percent solution. More preferably, the slow release sweetener is dissolved in ethanol. The powdered sucralose and the treated slow release sweetener may be added to the chewable gum base in any conventional manner. The slow release sweetener solution may also be blended with a flavoring agent. The solution and flavoring agent may be blended in any manner common to those skilled in the art. Preferably, the slow release sweetener solution is blended with a flavoring agent to yield a sweetener to flavor weight ratio range of about 1:300 to about 1:3. The sweetener in flavor blend may then be added to, or admixed with other gum ingredients in any conventional manner known to those skilled in the art.

In accordance with another embodiment, a slow release sweetener is first dissolved in alcohol and the solution is added to the gum as a separate flavor ingredient. Flavor is typically added at any time in the gum manufacturing process. Preferably, flavor is added in the later stages of the mixing process.

In accordance with yet another embodiment, a slow release sweetener is dissolved directly in a solvent comprising a flavoring agent. Once dissolved, the solution can then be added or admixed with other gum ingredients in the same manner as a separate flavor addition.

9

The release of slow release sweeteners may also be altered by co-drying or encapsulating sucralose with another material. Materials suitable for encapsulation or co-drying contemplated by the present invention include but are not limited to water soluble compounds such as cellulose, cellulose derivatives, starches, proteins, sugars, sugar alcohols and vegetable gums, and mixtures thereof.

The preferred quantity and type of encapsulating or co-drying material employed may vary depending upon a variety of factors including but not limited to the encapsulating or co-drying method employed, the type of encapsulent or co-drying agent used, and the amount of encapsulent or co-drying agent used.

Those skilled in the art will recognize that various methods of encapsulation and co-drying will alter the slow release sweeteners differently. In accordance with the present invention, slow release sweeteners may be treated by spray drying, granulation, fluidized bed coation, complex coacervation, spray chilling, prilling, extrusion, freeze drying, agglomeration, and other similar techniques.

In accordance with a particularly preferred embodiment it has been found that the form in which sucralose is added to the chewing gum composition apparently effects its release during chewing. For example, when added to the gum manufacture process in the powder form, sucralose does not appear to release from the chewing gum until about three to about five minutes into chewing. On the other hand, when the rate of release of sucralose is increased, for example, by dissolution in a food acceptable organic solvent, encapsulation, or co-drying an initial release of sweetness and flavor is experience almost instantaneously by the consumer upon chewing. Thus, in accordance with a presently preferred embodiment, powdered sucralose may be combined with sucralose which has been treated such that it releases from the chewing gum as a fast release sweetener during chewing.

EXAMPLES:

Example 1

A chewing gum containing sucralose was prepared in accordance with the the expected amounts of the prior art. The chewing gum was prepared by mixing powdered sucralose with the other chewing gum ingredients listed below in a conventional manner at the given proportions.

| Ingredient | Weight Percent |
|---|---|
| Sorbitol | 49.44 |
| Gum Base | 25.43 |
| Mannitol | 7.99 |
| Glycerin | 8.50 |
| Lecithin | 0.21 |
| Lycasin Syrup | 6.83 |
| Color | 0.05 |
| Peppermint | 1.44 |
| Sucralose | 0.066 |

Example 2

A chewing gum containing sucralose was prepared in accordance with the present invention. The chewing gum was prepared by mixing powdered sucralose with other chewing gum ingredients in a conventional manner as in Example 1. The formulation contained the same proportion of ingredients as listed in Example 1 with the exception that the gum contained 0.09 weight percent sucralose. When tested by a panel of experts, the chewing gum formulation of the present example exhibited extended sweetness and flavor release compared to the formulation of Example 1.

Example 3

A chewing gum containing sucralose was prepared in accordance with the present invention. The chewing gum was prepared by mixing powdered sucralose with other chewing gum ingredients in a conventional manner as in Example 1. The formulation contained the same proportion of ingredients as listed in Example 1 with the exception that the gum contained 0.14 weight percent sucralose. When tested by a panel of experts, the chewing gum formulation of the present invention exhibited extended sweetness and flavor release compared to the formulation of Example 1.

Example 4

A chewing gum containing sucralose may be prepared in accordance with a method of the prior art. The sucralose may be added as a powder along with other chewing gum ingredients in a conventional manner to yield the following chewing gum.

| Ingredient | Weight Percent |
|---|---|
| Sorbitol | 49.66 |
| Gum base | 25.43 |
| Mannitol | 8.00 |
| Glycerine | 8.55 |
| Lycasin | 6.78 |
| Lecithin | 0.21 |
| Color | 0.01 |
| Peppermint Flavor | 1.30 |
| Sucralose | 0.06 |

The chewing gum will exhibit, a slow sweetness release and a low initial impact of favor and sweetness.

Example 5

A chewing gum containing sucralose was prepared in accordance with one embodiment of the present invention. An amount of powdered sucralose was dissolved in ethyl alcohol to yield a 13% by weight solution. The sucralose solution was blended with a peppermint flavor in a ratio of 1:3, yielding a sucralose to flavor weight ratio of 1:21. The sucralose flavor blend was then added to the other gum ingredients to yield the following chewing gum. Although it is not exactly known, it is believed that at least a portion of the ethyl alcohol is also present in the chewing gum.

| Ingredient | Weight Percent |
|---|---|
| Sorbitol | 49.49 |
| Gum Base | 25.43 |
| Mannitol | 7.99 |
| Glycerine | 8.50 |
| Lycasin | 6.83 |
| Lecithin | 0.21 |
| Color | 0.05 |
| Peppermint Flavor | 1.44 |
| Sucralose | 0.06 |

The chewing gum initially had a rapid, high intensity sweetness release.

Example 6

A sucralose containing chewing gum was prepared in accordance with another embodiment of the present invention. Powered sucralose was dissolved in bubble gum flavor to yield a 2% by weight solution. The sucralose in flavor solution was then admixed with other ingredients to yield the following chewing gum.

11

| Ingredient | Weight Percent |
|---|---|
| Sorbitol | 46.567 |
| Gum Base | 32.53 |
| Lecithin | 1.50 |
| Color | 0.15 |
| Mannitol | 7.01 |
| Glycerine | 9.01 |
| Acids (for tartness) | 1.53 |
| Bubble Gum Flavor | 1.67 |
| Sucralose | 0.033 |

The chewing gum initially exhibited a fast sweetness onset which will balance the initial flavor and tartness.

Example 7

The release rate of sucralose was increased in a chewing gum by spray drying an aqueous solution containing 1.2 parts sucralose and 98.8 parts maltodextrin. The spray dried sucralose was then admixed with other ingredients to yield the following chewing gum.

| Ingredient | Weight Percent |
|---|---|
| Gum Base | 24.85 |
| Glycerine | 16.18 |
| Mannitol | 8.09 |
| Lecithin | 0.10 |
| Sorbitol | 45.21 |
| Color | 0.03 |
| Spearmint Flavor | 1.34 |
| Spray Dried Sucralose with Maltodextrin (1.2% active) | 4.2* |

*0.05% active sucralose in the gum.

The chewing gum had a clean spearmint flavor and an initial fast sweetness release.

Example 8

A chewing gum formulation containing a fast release sweetener and sucralose was prepared. The fast release sweetener employed was sugar. The chewing gum ingredients listed below were mixed together in a conventional manner. The chewing gum exhibited an initial impact of sweetness as well as a longer lasting sweetness and flavor.

| Ingredient | Weight Percent |
|---|---|
| Gum Base | 20.69 |
| Syrup | 16.86 |
| Glycerin | 0.94 |
| Sugar | 50.64 |
| Dextrose monohydrate | 10.15 |
| Color | 0.06 |
| Spearmint | 0.56 |
| Sucralose | 0.10 |

Example 9

A chewing gum formulation containing a fast release sweetener and sucralose was prepared. The fact

12

release sweetener employed was aspartame. The chewing gum ingredients listed below were mixed together in a conventional manner. The chewing gum exhibited an initial impact of sweetness as well as a slow release of sweetness.

| Ingredient | Weight Percent |
| --- | --- |
| Sorbitol | 49.28 |
| Gum base | 25.43 |
| Mannitol | 7.99 |
| Glycerin | 8.50 |
| Lecithin | 0.21 |
| Lycasin syrup | 6.83 |
| Color | 0.05 |
| Peppermint | 1.44 |
| Sucralose | 0.07 |
| Aspartame | 0.20 |

Example 10

A chewing gum formulation containing sucralose and a fast release sweetener (xylitol) may be prepared. The chewing gum ingredients listed below may be mixed together in a conventional manner. The chewing gum will exhibit an initial impact of sweetness as well as a longer lasting sweetness and flavor.

| Ingredient | Weight Percent |
| --- | --- |
| Sorbitol | 15.40 |
| Gum base | 25.43 |
| Xylitol | 39.00 |
| Mannitol | 6.99 |
| Glycerin | 4.50 |
| Lecithin | 0.21 |
| Lycasin syrup | 6.83 |
| Color | 0.05 |
| Peppermint | 1.44 |
| Sucralose | 0.15 |

Example 11

A chewing gum formulation containing sucralose and a fast release sweetener was prepared. The fast release sweetener employed was saccharin. The chewing gum ingredients listed below were mixed together in a conventional manner. The chewing gum exhibited an initial impact of sweetness as well as a slow release of sweetness.

| Ingredients | Weight Percent |
| --- | --- |
| Gum Base | 26.97 |
| Sorbitol | 41.09 |
| Mannitol | 12.0 |
| Sorbitol liquid | 10.66 |
| Glycerin | 7.93 |
| Spearmint | 1.20 |
| Sodium saccharin | 0.10 |
| Sucralose | 0.05 |

**Claims**

1. A chewing gum composition comprising a mixture of chewing gum ingredients comprising a chewable gum base and an effective amount of a sweetener comprising sucralose, wherein within the initial two minutes of chewing, said sucralose releases from said gum at a rate less than 8 sucrose equivalents per minute, and at about 10 minutes of chewing said sucralose releases from said gum at a rate greater than 3 sucrose equivalents per minute where a sucrose equivalent is a unit of sweetening power equal to the sweetening power present in a chewing gum containing 1 percent sucrose.

2. A chewing gum composition as claimed in Claim 1 wherein said sucralose is present in an amount such that at about 15 minutes of chewing, said sucralose releases from said gum at a rate greater than 1.5 sucrose equivalents per minute.

3. A chewing gum composition as claimed in Claim 1 or Claim 2 wherein said sucralose constitutes between 0.07 and 0.40 weight percent sucralose.

4. A chewing gum composition as claimed in Claim 1 or Claim 2 wherein said sucralose consititutes about 0.12 weight percent sucralose.

5. A chewing gum composition as claimed in any one of the preceding claims wherein said gum further comprises a flavor ingredient.

6. A chewing gum composition as claimed in any one of the preceding claims wherein said gum further comprises a bulking agent ingredient.

7. A chewing gum composition as claimed in any one of the preceding claims wherein said gum further comprises a softener ingredient.

8. A chewing gum composition as claimed in any one of the preceding claims wherein said gum further comprises sorbitol.

9. A chewing gum composition as claimed in any one of the preceding claims further comprising a fast release sweetener.

10. A chewing gum composition as claimed in Claim 9 wherein said fast release sweetener comprises sugar, aspartame, xylitol or saccharin or a mixture of two or more thereof.

11. A chewing gum composition as claimed in Claim 9 wherein said fast release sweetener comprises a fast release acting slow release high intensity sweetener.

12. A chewing gum composition as claimed in Claim 11 wherein said slow release high intensity sweetener comprises sucralose.

13. A chewing gum composition as claimed in Claim 11 or Claim 12 wherein said slow release high intensity sweetener is encapsulated, co-dryed, or disssolved in a food acceptable solvent.

14. A method of manufacturing a chewing gum composition comprising a mixture of chewing gum ingredients comprising at least a chewable gum base and an effective amount of a sweetener comprising sucralose, said method comprising adding said sucralose to said chewing gum mixture in an amount wherein within the intial 2 minutes of chewing, said sucralose releases from said gum at a rate less than 8 sucrose equivalents per minute, and at about 10 minutes of chewing said sucralose releases from said gum at a rate greater than 3 sucrose equivalents per minute where a sucrose equivalent is a unit of sweetening power equal to the sweetening power present in a chewing gum containing 1 percent sucrose.

15. A method as claimed in Claim 14 wherein said sucralose is added in an amount sufficient to obtain a chewing gum composition having between 0.07 and 0.40 weight percent sucralose.

**16.** A method as claimed in Claim 14 wherein said sucralose is added in an amount sufficient to obtain a chewing gum composition having about 0.12 weight percent sucralose.

**17.** A method as claimed in any one of Claims 14 to 16 further comprising adding a fast release sweetener.

**18.** A method as claimed in Claim 17 wherein said fast release sweetener is prepared by treating sucralose to act as a fast release sweetener.

**19.** A method as claimed in Claim 17 or Claim 18 wherein said sucralose is treated by encapsulating, co-drying, or dissolving in a food acceptable solvent.

**20.** A chewing gum composition comprising a mixture of chewing gum ingredients comprising at least a chewable gum base and an effective amount of sweetener, said chewing gum composition having both an initial impact of sweetness and a longer lasting sweetness, said sweetener comprising sucralose and a fast release sweetener where any portion of sucralose which has not been altered to act as a fast-release sweetener releases from said gum within, the initial 2 minutes of chewing, at a rate less than 8 sucrose equivalents per minute, and at about 10 minutes of chewing releases at a rate greater than 3 sucrose equivalents per minute.

**Patentansprüche**

**1.** Kaugummi-Zusammensetzung, die umfaßt eine Mischung von Kaugummi-Bestandteilen, enthaltend eine Kaugummi-Basis und eine wirksame Menge eines Süßungsmittels, das Sucralose umfaßt, bei der innerhalb der beiden ersten Minuten des Kauens die Sucralose aus dem Kaugummi mit einer Geschwindigkeit von weniger als 8 Saccharose-Äquivalenten pro Minute freigesetzt wird und nach etwa 10-minütigem Kauen die Sucralose aus dem Kaugummi mit einer Geschwindigkeit von mehr als 3 Saccharose-Äquivalenten pro Minute freigesetzt wird, wobei ein Saccharose-Äquivalent eine Einheit des Süßungsvermögens (Süßkraft) ist, die gleich dem Süßungsvermögen (Süßkraft) ist, das in einem 1 % Saccharose enthaltenden Kaugummi vorliegt.

**2.** Kaugummi-Zusammensetzung nach Anspruch 1, in der die Sucralose in einer solchen Menge vorliegt, daß nach etwa 15-minütigem Kauen die Sucralose aus dem Kaugummi mit einer Geschwindigkeit von mehr als 1,5 Saccharose-Äquivalenten pro Minute freigesetzt wird.

**3.** Kaugummi-Zusammensetzung nach Anspruch 1 oder 2, worin der Sucralose-Gehalt zwischen 0,07 und 0,40 Gew.-% Sucralose liegt.

**4.** Kaugummi-Zusammensetzung nach Anspruch 1 oder 2, worin der Sucralose-Gehalt etwa 0,12 Gew.-% Sucralose beträgt.

**5.** Kaugummi-Zusammensetzung nach einem der vorhergehenden Ansprüche, worin das Kaugummi außerdem einen geschmacksbildenden Bestandteil (Aromastoff) enthält.

**6.** Kaugummi-Zusammensetzung nach einem der vorhergehenden Ansprüche, worin das Kaugummi außerdem einen Quellmittel-Bestandteil (bulking agent) enthält.

**7.** Kaugummi-Zusammensetzung nach einem der vorhergehenden Ansprüche, worin das Kaugummi außerdem einen Weichmacher-Bestandteil enthält.

**8.** Kaugummi-Zusammensetzung nach einem der vorhergehenden Ansprüche, worin das Kaugummi außerdem Sorbit enthält.

**9.** Kaugummi-Zusammensetzung nach einem der vorhergehenden Ansprüche, die außerdem ein Süßungsmittel mit schneller Freisetzung enthält.

**10.** Kaugummi-Zusammensetzung nach Anspruch 9, worin das Süßungsmittel mit schneller Freisetzung umfaßt Zucker, Aspartame, Xylit oder Saccharin oder eine Mischung von zwei oder mehr derselben.

**11.** Kaugummi-Zusammensetzung nach Anspruch 9, worin das Süßungsmittel mit schneller Freisetzung umfaßt ein hochintensives Süßungsmittel mit langsamer Freisetzung, das als ein solches mit schneller Freisetzung wirkt.

**12.** Kaugummi-Zusammensetzung nach Anspruch 11, worin das hochintensive Süßungsmittel mit langsamer Freisetzung Sucralose umfaßt.

**13.** Kaugummi-Zusammensetzung nach Anspruch 11 oder 12, worin das hochintensive Süßungsmittel mit langsamer Freisetzung eingekapselt, cogetrocknet oder gelöst in einem für Lebensmittel akzeptablen Lösungsmittel vorliegt.

**14.** Verfahren zur Herstellung einer Kaugummi-Zusammensetzung, die umfaßt eine Mischung von Kaugummi-Bestandteilen, enthaltend mindestens eine Kaugummi-Basis und eine wirksame Menge eines Süßungsmittels, das Sucralose umfaßt, wobei das Verfahren umfaßt die Zugabe der Sucralose zu der Kaugummi-Mischung in einer solchen Menge, daß innerhalb der ersten 2 Minuten des Kauens die Sucralose aus dem Kaugummi mit einer Geschwindigkeit von weniger als 8 Saccharose-Äquivalenten pro Minute freigesetzt wird und nach etwa 10-minütigem Kauen die Sucralose aus dem Kaugummi mit einer Geschwindigkeit von mehr als 3 Saccharose-Äquivalenten pro Minute freigesetzt wird, wobei ein Saccharose-Äquivalent eine Einheit des Süßungsvermögens ist, die gleich dem Süßungsvermögen ist, das in einem 1 % Saccharose enthaltenden Kaugummi vorliegt.

**15.** Verfahren nach Anspruch 14, worin die Sucralose in einer Menge zugegeben wird, die ausreicht, um eine Kaugummi-Zusammensetzung zu ergeben, die zwischen 0,07 und 0,40 Gew.-% Sucralose enthält.

**16.** Verfahren nach Anspruch 14, worin die Sucralose in einer Menge zugegeben wird, die ausreicht, um eine Kaugummi-Zusammensetzung zu ergeben, die etwa 0,12 Gew.-% Sucralose enthält.

**17.** Verfahren nach einem der Ansprüche 14 bis 16, bei dem außerdem ein Süßungsmittel mit schneller Freisetzung zugegeben wird.

**18.** Verfahren nach Anspruch 17, bei dem das Süßungsmittel mit schneller Freisetzung hergestellt wird durch Behandeln von Sucralose, so daß sie als Süßungsmittel mit langsamer Freisetzung wirkt.

**19.** Verfahren nach Anspruch 17 oder 18, worin die Sucralose behandelt wird durch Einkapseln, Cotrocknen oder Auflösen in einem für ein Lebensmittel akzeptablen Lösungsmittel.

**20.** Kaugummi-Zusammensetzung, die umfaßt eine Mischung von Kaugummi-Bestandteilen, enthaltend mindestens eine Kaugummi-Base und eine wirksame Menge eines Süßungsmittels, wobei die Kaugummi-Zusammensetzung sowohl eine hohe Anfangs-Süße als auch eine länger anhaltende Süße aufweist, wobei das Süßungsmittel Sucralose und ein Süßungsmittel mit schneller Freisetzung umfaßt, wobei der Teil der Sucralose, der nicht verändert worden ist, um als Süßungsmittel mit schneller Freisetzung zu wirken, innerhalb der ersten 2 Minuten des Kauens mit einer Geschwindigkeit von weniger als 8 Saccharose-Äquivalenten pro Minute aus dem Kaugummi freigesetzt wird und nach etwa 10-minütigem Kauen mit einer Geschwindigkeit von mehr als 3 Saccharose-Äquivalenten pro Minute freigesetzt wird.

**Revendications**

**1.** Composition de chewing-gum comprenant un mélange d'ingrédients de chewing-gum, contenant une base de gomme masticable et une quantité efficace d'un édulcorant comprenant du sucralose, composition dans le cas de laquelle, dans les deux minutes initiales de mâchonnage, le sucralose se dégage de la gomme à une vitesse inférieure à 8 équivalents de saccharose par minute et, au bout de 10 min de mâchonnage, la libération de sucralose par ladite gomme s'effectue à une vitesse supérieure à 3 équivalents de saccharose par minute, un équivalent de saccharose étant une unité de pouvoir édulcorant ou sucrant égale au pouvoir édulcorant présent dans un chewing-gum contenant 1 % de saccharose.

**2.** Composition de chewing-gum telle que revendiquée à la revendication 1, dans laquelle ledit sucralose est présent en une quantité telle qu'au bout d'environ 15 min de mastication ou de mâchonnage, ce sucralose se dégage de ladite gomme à une vitesse supérieure à 1,5 équivalent de saccharose par minute.

3.  Composition de chewing-gum telle que revendiquée à la revendication 1 ou à la revendication 2, dans laquelle ledit sucralose est présent en une quantité comprise entre 0,07 et 0,40 % en poids de sucralose.

4.  Composition de chewing-gum telle que revendiquée à la revendication 1 ou à la revendication 2, dans laquelle ledit sucralose est présent en une quantité d'environ 0,12 % en poids de sucralose.

5.  Composition de chewing-gum telle que revendiquée dans l'une quelconque des revendications précédentes, dans laquelle ladite gomme comprend en outre un ingrédient donnant de la flaveur.

6.  Composition de chewing-gum telle que revendiquée dans l'une quelconque des revendications précédentes, dans laquelle ladite gomme contient en outre un ingrédient qui est un agent donnant du corps ou du volume.

7.  Composition de chewing-gum telle que revendiquée dans l'une quelconque des revendications précédentes, dans laquelle ladite gomme comprend en outre un ingrédient assouplisseur ou plastifiant.

8.  Composition de chewing-gum telle que revendiquée dans l'une quelconque des revendications précédentes, dans laquelle ladite gomme comprend en outre du sorbitol.

9.  Composition de chewing-gum telle que revendiquée dans l'une quelconque des revendications précédentes, comprenant en outre un édulcorant à libération rapide.

10. Composition de chewing-gum telle que revendiquée à la revendication 9, dans laquelle ledit édulcorant à libération rapide comprend du sucre, de l'aspartame, du xylitol ou de la saccharine ou un mélange de deux ou de plus de deux de ces agents.

11. Composition de chewing-gum telle que revendiquée à la revendication 9, dans laquelle l'édulcorant à libération rapide comprend un édulcorant à libération lente, à haute intensité d'effet, jouant le rôle d'un agent à libération rapide.

12. Composition de chewing-gum telle que revendiquée à la revendication 11, dans laquelle l'édulcorant à haute intensité et à libération lente est ou comprend du sucralose.

13. Composition de chewing-gum telle que revendiquée à la revendication 11 ou à la revendication 12, dans laquelle ledit édulcorant à haute intensité et à libération lente est encapsulé, co-séché ou dissous dans un solvant acceptable dans des aliments.

14. Procédé de fabrication d'une composition de chewing-gum comprenant un mélange d'ingrédients de chewing-gum, comprenant au moins une base de gomme mâchonnable et une quantité efficace d'un édulcorant comprenant du sucralose, ledit procédé comprenant l'addition du sucralose au mélange générateur de chewing-gum, addition effectuée en une quantité telle que, dans les deux premières minutes du mâchonnage, le sucralose se dégage de ladite gomme à une vitesse inférieure à 8 équivalents de saccharose par minute et au bout de 10 min de mâchonnage, le sucralose se dégage de la gomme à une vitesse supérieure à 3 équivalents de saccharose par minute, 1 équivalent de saccharose étant une unité de pouvoir édulcorant ou sucrant égale au pouvoir édulcorant ou sucrant présent dans un chewing-gum contenant 1 % de saccharose.

15. Procédé tel que revendiqué à la revendication 14, dans lequel ledit sucralose est ajouté en une quantité suffisante pour obtenir une composition de chewing-gum comportant entre 0,07 et 0,40 % en poids de sucralose.

16. Procédé tel que revendiqué à la revendication 14, dans lequel ledit sucralose est ajouté en une quantité suffisante pour donner une composition de chewing-gum comportant environ 0,12 % en poids de sucralose.

**17.** Procédé tel que revendiqué dans l'une quelconque des revendications 14 à 16, comprenant en outre l'addition d'un édulcorant à libération rapide.

**18.** Procédé tel que revendiqué à la revendication 17, dans lequel ledit édulcorant à libération rapide est préparé par traitement du sucralose de manière que celui-ci joue le rôle d'un édulcorant à libération rapide.

**19.** Procédé tel que revendiqué à la revendication 17 ou à la revendication 18, dans lequel ledit sucralose est traité par encapsulation, par co-séchage ou par dissolution dans un solvant acceptable dans des aliments.

**20.** Composition de chewing-gum comprenant un mélange d'ingrédients de chewing-gum, comprenant au moins une base pour gomme mâchonnable ou masticable et une quantité efficace d'un édulcorant, ladite composition de chewing-gum ayant à la fois un impact initial de goût sucré et un goût sucré qui dure plus longtemps, ledit édulcorant comprenant du sucralose et un édulcorant à libération rapide, tout ou partie éventuelle du sucralose qui n'a pas été modifié pour jouer le rôle d'un édulcorant à libération rapide se dégageant de ladite gomme, dans les deux minutes initiales de mâchonnage, à une vitesse inférieure à 8 équivalents de saccharose par minute et se dégageant au bout de 10 min environ de mâchonnage à une vitesse supérieure à 3 équivalents de saccharose par minute.

# FIG. 1
## SWEETENER RELEASE RATE VS. TIME

ASPARTAME

SUCRALOSE

PERCENT OF INITIAL LEVEL PER MINUTE

MINUTES

EP 0 314 758 B1

# FIG. 2
## SWEETNESS RELEASE RATE VS. TIME

0.15% ASPARTAME    0.06% SUCRALOSE

0.30% ASPARTAME    0.12% SUCRALOSE

0.24% SUCRALOSE

SUCROSE EQUIVALENTS PER MINUTE

MINUTES

EP 0 314 758 B1

# FIG. 3

## CUMULATIVE SWEETENER RELEASE VS. TIME

SACCHARIN

SUCRALOSE IN ETOH

SUGAR

SUCRALOSE POWDER

ASPARTAME

EP 0 314 758 B1